# EUROPEAN PATENT APPLICATION

(11) **EP 3 369 965 A1**
(43) Date of publication of application: **05.09.2018**
(21) Application number: 16859922.3
(22) Date of filing: 27.10.2016
(51) Int. Cl.: F16H 1/32, F16H 57/04

(54) **GEAR TRANSMISSION**

(30) Priority: 30.10.2015 JP 2015214537
(71) Applicant: Nidec Shimpo Corporation, Nagaokakyo-city, Kyoto 617-0833 (JP)
(72) Inventor: MAEGUCHI, Yuji, Nagaokakyo-city Kyoto 617-0833 (JP); SUGISHITA, Kenji, Nagaokakyo-city Kyoto 617-0833 (JP); TSUBONE, Taihei, Nagaokakyo-city Kyoto 617-0833 (JP); SHIGETA, Yoji, Nagaokakyo-city Kyoto 617-0833 (JP)
(74) Representative: 2K Patentanwälte Blasberg Kewitz & Reichel
(86) International application number: PCT/JP2016/081943
(87) International publication number: WO 2017/073693

(57) **Abstract**

This gear transmission comprises an input rotary body (10), an output rotary body (30), and a transmission mechanism. The transmission mechanism comprises: a plurality of externally toothed gears (51, 52) provided with a plurality of through holes (55) and a plurality of outer teeth (53); a spacer (57) that forms a gap between adjacent externally toothed gears (51, 52); a plurality of eccentric bearings (40); an annular frame (60); and a plurality of internal pins (62) that mesh with the outer teeth (53) along the inner circumference of the frame (60). The output rotary body (30) comprises disk bodies (31, 32) and a plurality of carrier pins (33) that are fixed to the disk bodies (31, 32) and individually inserted into the plurality of through holes (55). At least one solid lubricant (70) is arranged on the interior of the frame (60). The solid lubricant (70) is in contact with at least the internal pins (62), the externally toothed gears (51, 52), or the carrier pins (33). As a result, it is possible to supply a lubricating component to a drive section of the gear transmission. It is thus possible to reduce the resistance of the drive section of the gear transmission.

## Description

### BACKGROUND OF THE INVENTION

### Technical Field

The present invention relates to a gear transmission.

### Description of Related Art

Conventionally, an inscribed planetary gear transmission used to drive industrial equipment is known. The inscribed planetary gear transmission usually includes externally toothed gears, and internally toothed gears formed by external pins whose inner teeth are independent from bodies of the internally toothed gears. And power is transferred by the inner gearing of the externally toothed gears and the external pins. In such a gear transmission, the lubricity of a drive section should be maintained to suppress transfer loss of the power and to protect structural members from abrasion. A technique which seals substantially liquid lubricants such as grease in an interior of a casing is known as such means to maintain the lubricity of the gear transmission. In addition, in Japanese Laid-open No. 2006-226370 (patent literature 1), a swing inner-gearing power transferring device, which includes an oil-containing member that contains a lubricant in a position capable of contacting with the external pins.

Patent literature 1: Japanese Laid-open No. 2006-226370

### SUMMARY OF THE INVENTION

### [Problems to be Solved]

However, in a grease sealing type gear transmission, quite a lot of grease is sealed in order to spread the grease to necessary parts. That is, extra grease is sealed in the interior of the casing. Extra grease increases stirring resistance of the gear transmission. Therefore, extra rotation torque is needed to drive the gear transmission. Besides, viscosity of the grease increases in low temperature circumstance. Therefore, if the gear transmission is used in low temperature circumstance, the rotation torque needed to drive the gear transmission increases. In addition, there is concern that the grease may leak due to long-term use, and the lubricity may decrease.

On the other hand, the structure recited in patent literature 1 can prevent grease leakage or increase in stirring resistance. Besides, lubricating component can be supplied to the external pins which are necessary for lubrication. However, the lubricity in a meshing section of the outer teeth and the external pins or in a drive section of the externally toothed gears and the like is insufficient.

An object of the present invention is to provide a technique which can steadily keep a lubricant in an interior of a casing in a gear transmission to supply sufficient lubricating component to a drive section and maintain lubricity in a long term.

### [Means to Solve the Problems]

An exemplary first invention of the disclosure is a gear transmission which changes a rotary speed and includes: an input rotary body, which performs rotation motion at an input rotation number around a rotation axis; an output rotary body, which performs rotation motion at an output rotation number different from the input rotation number; a transmission mechanism, which converts the rotation motion of the input rotary body to the rotation motion of the output rotary body and transfers the rotation motion; the transmission mechanism includes: a plurality of externally toothed gears, which is arranged on a radial external side of the input rotary body and includes a plurality of through holes and a plurality of outer teeth on an outer circumference; a spacer, which is arranged between the plurality of externally toothed gears and forms a gap between adjacent externally toothed gears; a plurality of eccentric bearings, which is arranged on an outer circumference section of the input rotary body, and rotatably supports the externally toothed gears around an eccentric axis which is eccentric to the rotation axis; an annular frame, which is arranged on a radial external side of the externally toothed gears; and a plurality of internal pins, which meshes with the outer teeth along an inner circumference of the frame; the output rotary body includes: disk bodies, which are arranged perpendicularly to the input rotary body; a plurality of carrier pins, which are fixed on the disk bodies, are inserted into the plurality of through holes separately and extend in parallel to the rotation axis; at least one solid lubricant is arranged on an interior of the frame, and the solid lubricant is in contact with at least the internal pins, the externally toothed gears, or the carrier pins.

### [Effect of the invention]

According to the exemplary first invention of the disclosure, grease leakage is prevented, and lubricating component can be steadily supplied to each drive section of the gear transmission in a long term by the solid lubricant disposed in the interior of the frame. Accordingly, the resistance in the drive section of the gear transmission can be decreased. Therefore, the electric power consumed to drive the gear transmission can be decreased. Besides, drive failure caused by overload during the starting of the gear transmission can be prevented. That is, the starting performance of the gear transmission can be improved.

### BRIEF DESCRIPTION OF THE DRAWINGS

FIG. 1 is a vertical cross-sectional view of a gear speed reducer of a first embodiment.
FIG. 2 is a transverse cross-sectional view of the gear speed reducer of the first embodiment.
FIG. 3 is a transverse cross-sectional view of the gear speed reducer of the first embodiment.
FIG. 4 is a partial vertical cross-sectional view of the gear speed reducer of the first embodiment.
FIG. 5 is a diagram illustrating a relationship between an operation time and a rotation torque of the gear speed reducer of the first embodiment.
FIG. 6 is a diagram illustrating a relationship between an operation time and a rotation torque of the gear speed reducer of the first embodiment.
FIG. 7 is a transverse cross-sectional view of a gear speed reducer of a variation.
FIG. 8 is a partial vertical cross-sectional view of a gear speed reducer of a variation.
FIG. 9 is a transverse cross-sectional view of a gear speed reducer of a variation.
FIG. 10 is a transverse cross-sectional view of a gear speed reducer of a variation.
FIG. 11 is a vertical cross-sectional view of a gear speed reducer of a variation.

### DESCRIPTION OF THE EMBODIMENTS

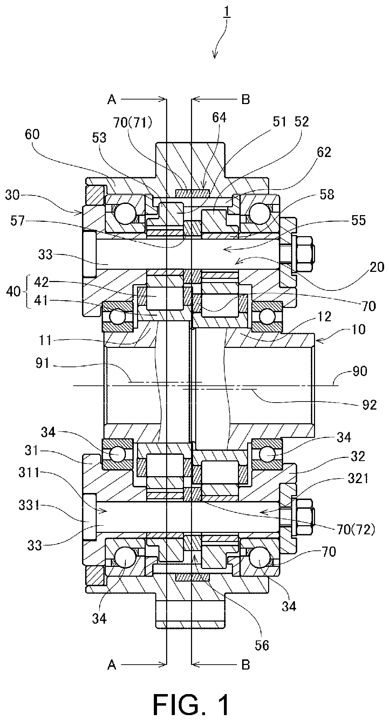

In the following part, an exemplary embodiment of the present invention is described with reference to the drawings. In addition, in the disclosure, a direction parallel to the rotation axis is called as an "axial direction", a direction perpendicular to the rotation axis is called as a "radial direction", and a direction along a circle centering on the rotation axis is called as a "circumferential direction". However, the "parallel direction" also includes a direction substantially in parallel. Besides, the "perpendicular direction" also includes a direction substantially perpendicular. In addition, in the following part, for convenience of description, the right side in FIG. 1 is called as an "upper side in the axial direction", and the left side in FIG. 1 is called as a "lower side in the axial direction". However, the definition of the up and down direction is not intended to limit the orientation when using a gear transmission of the present invention.

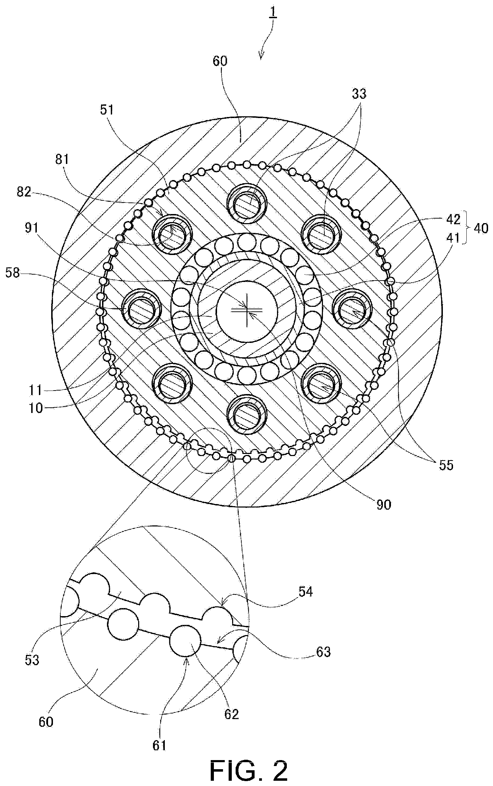

In the following part, a gear speed reducer (simply referred to as speed reducer hereinafter) which is an exemplary embodiment of the gear transmission is described. FIG. 1 is a vertical cross-sectional view obtained by cutting a speed reducer 1 of a first embodiment of the present invention by a flat surface containing a rotation axis 90. FIG. 2 is a transverse cross-sectional view of the speed reducer 1 observed from an A-A cross section in FIG. 1.

The speed reducer 1 is an inscribed planetary speed reducer which converts a rotation motion at an input rotation number to a rotation motion at an output rotation number lower than the input rotation number. The speed reducer 1 is incorporated in, for example, a driving mechanism of a robot, a work machine, an X-Y table, a material cutting device, a conveyor line, a turntable, a mill roller and so on for use. However, the speed reducer 1 of the present invention may also be used for other purposes.

As shown in FIG. 1, the speed reducer 1 of the embodiment includes an input rotary body 10, a speed mechanism 20, and an output rotary body 30.

The input rotary body 10 is a member which rotates at an input rotation number that is a rotation number input from outside. In the embodiment, a cylindrical member arranged along the rotation axis 90 becomes the input rotary body 10. An end of the input rotary body 10 on the upper side in the axial direction is connected to a motor which is a driving source directly or via other power transferring mechanisms. When the motor is driven, the input rotary body 10 rotates at the input rotation number around the rotation axis 90.

The input rotary body 10 includes a first eccentric section 11 and a second eccentric section 12 which is on the upper side of the first eccentric section 11 in the axial direction. The first eccentric section 11 has a cylindrical outer circumference surface which centers on a first eccentric axis 91 extending in parallel to the rotation axis 90 in a position deviating from the rotation axis 90. The second eccentric section 12 also has a cylindrical outer circumference surface which centers on a second eccentric axis 92 extending in parallel to the rotation axis 90 in a position deviating from the rotation axis 90. The first eccentric axis 91 and the second eccentric axis 92 are located on opposite sides with the rotation axis 90 sandwiched in between. Besides, if the input rotary body 10 rotates, the positions of the first eccentric axis 91 and the second eccentric axis 92 also rotate around the rotation axis 90.

The speed mechanism 20 which is a transmission mechanism is a mechanism that exists between the input rotary body 10 and the output rotary body 30, decelerates the rotation motion of the input rotary body 10 and transfers to the output rotary body 30. The speed mechanism 20 of the embodiment has a pair of eccentric bearings 40, a first externally toothed gear 51, a second externally toothed gear 52, a frame 60 and a solid lubricant 70.

The pair of eccentric bearings 40 is mounted on the outer circumference section of the first eccentric section 11 and the second eccentric section 12 separately. The eccentric bearing 40 has an internal wheel 41 and a plurality of rollers 42. The internal wheel 41 is a cylindrical member centering on the first eccentric axis 91. The internal wheel 41 rotates around the rotation axis 90 of the input rotary body 10 when the input rotary body 10 rotates. The plurality of rollers 42 is rotatably arranged on the outer circumference section of the internal wheel 41 while the motion in the circumferential direction and the axial direction controlled. In addition, the number of the rollers 42 included in the eccentric bearings 40 is 18 in the embodiment, and may also be other numbers.

The first externally toothed gear 51 is mounted on the radial external side of the first eccentric section 11 via the eccentric bearings 40. Therefore, the first externally toothed gear 51 is rotatably supported around the first eccentric axis 91 of the first eccentric section 11. The second externally toothed gear 52 is mounted on the radial external side of the second eccentric section 12 via the eccentric bearings 40. Therefore, the second externally toothed gear 52 is rotatably supported around the second eccentric axis 92 of the second eccentric section 12.

As enlarged and shown in FIG. 2, the first externally toothed gear 51 has a plurality of outer teeth 53 which protrudes toward the radial external side in the outer circumference section. Besides, inter-outer-teeth grooves 54 which dent toward the radial internal side are disposed between adjacent outer teeth 53. The outer teeth 53 and the inter-outer-teeth grooves 54 are alternated in the circumferential direction around the first eccentric axis 91. Besides, similar to the first externally toothed gear 51, the second externally toothed gear 52 also has a plurality of outer teeth 53 and a plurality of inter-outer-teeth grooves 54 in the outer circumference section.

Moreover, as shown in FIG. 1 and FIG. 2, the first externally toothed gear 51 has a plurality of (8 in the example in FIG. 2) through holes 55 which extends in the axial direction. The plurality of through holes 55 is equally spaced in the circumferential direction around the first eccentric axis 91. Each through hole 55 penetrates the first externally toothed gear 51 in the axial direction on the radial internal side of the outer teeth 53 and the inter-outer-teeth grooves 54. In addition, similar to the first externally toothed gear 51, the second externally toothed gear 52 has a plurality of through holes 55. Besides, as shown in FIG. 1, between the adjacent first externally toothed gear 51 and second externally toothed gear 52, a spacer 57 which forms a gap 56 in the axial direction is arranged. Here, a width of the gap 56 in the axial direction is substantially the same as a width of the spacer 57 in the axial direction.

The frame 60 is a substantially cylindrical member which accommodates the input rotary body 10, the output rotary body 30, and the two externally toothed gears 51, 52 in the interior. As enlarged and shown in FIG. 2, the frame 60 has, in the inner circumference section, a plurality of inner teeth arrangement sections 61 which dents toward the radial external side and extends in the axial direction. Besides, internal pins 62 which are inner teeth are rotatably arranged on the plurality of inner teeth arrangement sections 61 separately. In the embodiment, the plurality of internal pins 62 is arranged substantially in parallel to the axial direction. Besides, between adjacent internal pins 62, inter-inner-teeth grooves 63 which dent toward the radial external side are formed. The internal pins 62 and the inter-inner-teeth grooves 63 are alternated in the circumferential direction around the rotation axis 90.

The plurality of outer teeth 53 of each externally toothed gear 51, 52 meshes with the plurality of internal pins 62. That is, during the operation of the speed reducer 1, the outer teeth 53 of each externally toothed gear 51, 52 engage with the inter-inner-teeth grooves 63 of the frame 60, and internal pins 62 engage with the inter-outer-teeth grooves 54 of each externally toothed gear 51, 52, while each externally toothed gear 51, 52 rotates. In this way, the frame 60 functions as an internally toothed gear. In addition, in the embodiment, the internal pins 62 rotate in the inner teeth arrangement sections 61 by meshing with the outer teeth 53. Accordingly, the outer teeth 53 can smoothly mesh with the internal pins 62.

The first externally toothed gear 51 and the second externally toothed gear 52 revolve around the rotation axis 90 due to the power of the input rotary body 10, and rotate due to the meshing with the internal pins 62 of the frame 60. Here, the number of the internal pins 62 is greater than the number of the outer teeth 53 included in the first externally toothed gear 51 and in the second externally toothed gear 52 respectively. Therefore, during each revolution of each externally toothed gear 51, 52, the position of the outer teeth 53 meshing with the internal pins 62 on the same position of the frame 60 shifts. Accordingly, the first externally toothed gear 51 and the second externally toothed gear 52 rotate at an output rotation number lower than an input rotation number toward a direction which is opposite to the rotation direction of the input rotary body 10. Therefore, the position of the through holes 55 of each externally toothed gear 51, 52 also rotate at the output rotation number which is lower than the input rotation number.

When the number of the outer teeth 53 included in the first externally toothed gear 51 and in the second externally toothed gear 52 respectively is set to N, and the number of the internal pins 62 arranged on the inner circumference section of the frame 60 is set to M, a speed reduction ratio P of the speed mechanism 20 is P=(the input rotation number)/(the output rotation number)=N/(M-N). In the example of FIG. 2, N=59, and M=60, thus the speed reduction ratio of the speed mechanism 20 in the example is P=59. That is, the output rotation number is 1/59 of the input rotation number. However, the speed reduction ratio of the speed mechanism in the present invention may also be other values.

The output rotary body 30 rotates around the rotation axis 90 at the output rotation number after speed reduction. As shown in FIG. 1 and FIG. 2, the output rotary body 30 of the embodiment has a first disk body 31, a second disk body 32, and a plurality of (8 in the embodiment) carrier pins 33.

The first disk body 31 is an annular member which is arranged perpendicular to the rotation axis 90. The first disk body 31 is arranged in the axial direction on the lower side of the first externally toothed gear 51 and the second externally toothed gear 52. Ball bearings 34 exist between the first disk body 31 and the input rotary body 10 and between the first disk body 31 and the frame 60 separately. Accordingly, the first disk body 31 is relatively rotatably supported with respect to the frame 60 and the input rotary body 10.

Besides, a plurality of (8 in the embodiment) press-fitted holes 311 used for press fitting the plurality of carrier pins 33 is disposed on the first disk body 31. The plurality of press-fitted holes 311 is equally spaced in the circumferential direction around the rotation axis 90. Each press-fitted hole 311 penetrates through the first disk body 31 in the axial direction.

The second disk body 32 is an annular member which is arranged perpendicular to the rotation axis 90. The second disk body 32 is arranged in the axial direction on the upper side of the first externally toothed gear 51 and the second externally toothed gear 52. The ball bearings 34 exist between the second disk body 32 and the input rotary body 10 and between the second disk body 32 and the frame 60 separately. Accordingly, the second disk body 32 is relatively rotatably supported with respect to the frame 60 and the input rotary body 10.

Besides, a plurality of (8 in the embodiment) fixing holes 321 used for inserting ends of the plurality of carrier pins 33 on the upper side in the axial direction is disposed on the second disk body 32. The plurality of fixing holes 321 is equally spaced in the circumferential direction around the rotation axis 90. Each fixing hole 321 penetrates through the second disk body 32 in the axial direction.

The plurality of carrier pins 33 is cylindrical members connected to the first disk body 31 and the second disk body 32. Each carrier pin 33 is arranged substantially in parallel to the rotation axis 90. Besides, the plurality of carrier pins 33 is inserted separately into the plurality of through holes 55 of the first externally toothed gear 51 and the second externally toothed gear. The plurality of carrier pins 33 is separately press-fitted in the plurality of press-fitted holes 311 of the first disk body 31. Besides, a flange section 331 with an enlarged diameter is disposed on an end of each carrier pin 33 on the lower side in the axial direction. The flange section 331 contacts with the first disk body 31 in the axial direction. Accordingly, each carrier pin 33 is prevented from falling toward the upper side in the axial direction. Besides, the end of each carrier pin 33 on the upper side in the axial direction is inserted into the fixing hole 321 of the second disk body 32 and is fixed to the second disk body 32 by a screw nut.

As shown in FIG. 2, first clearances 81 exist between a surface forming each through hole 55 and an outer circumference surface of the carrier pin 33. And annular bushing rings 58 are inserted into first clearances 81 of the first externally toothed gear 51 and the second externally toothed gear 52 separately. The bushing rings 58 are positioned inside the through holes 55 and surround the radial external side of the carrier pins 33. When the first externally toothed gear 51 and the second externally toothed gear 52 rotate at the output rotation number after speed reduction, the power is transferred to each carrier pin 33 via the bushing rings 58. As a result, the plurality of carrier pins 33, the first disk body 31, and the second disk body 32 rotate at the output rotation number around the rotation axis 90. In addition, in the embodiment, second clearances 82 exist between the bushing rings 58 and the carrier pins 33.

Next, the solid lubricant 70 is described.

The solid lubricant 70 is a member arranged in the interior of the frame 60, and is used to supply lubricating component to each section of the speed reducer 1. As shown in FIG. 1, the solid lubricant 70 of the embodiment is arranged on positions contacting with the internal pins 62, positions contacting with the first externally toothed gear 51 and the second externally toothed gear 52, positions contacting with the carrier pins 33, positions contacting with the ball bearings 34, and positions contacting with the rollers 42 of the eccentric bearings 40. However, the solid lubricant 70 may also be arranged on other positions inside the frame 60.

The solid lubricant 70 is molded, for example, by pouring substantially liquid lubricant into the interior of a mold and conducting thermal treatment. However, the solid lubricant 70 may also be formed by other technology such as mechanical processing. The material of the solid lubricant 70 uses, for example, grease, polyethylene and cross-linking agent which are lubricating component. The grease is evenly dispersed in the polyethylene which is the base material. Therefore, the solid lubricant 70 can evenly supply lubricating component to each section. Besides, a hardness of the solid lubricant 70 can be adjusted by a content of the cross-linking agent. Therefore, it is easy to process the solid lubricant 70. Besides, the solid lubricant 70 can be steadily kept inside the frame 60. In addition, the cross-linking agent uses lithium stearate for example.

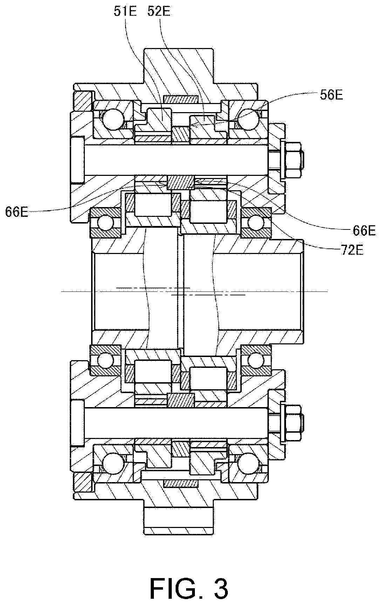

Next, a first solid lubricant 71 serving as the solid lubricant 70 is described. FIG. 3 is a transverse cross-sectional view of the speed reducer 1 observed from a B-B cross section in FIG. 1.

As shown in FIG. 1 and FIG. 3, the frame 60 has, on an inner circumference section, first groove sections 64 which dent toward the radial external side and extend in the circumferential direction. The first groove sections 64 oppose at least a portion of each of the adjacent first externally toothed gear 51 and second externally toothed gear 52 in the radial direction. And the first solid lubricant 71 is disposed on the first groove sections 64. The first solid lubricant 71 at least contacts with the internal pins 62. Accordingly, the lubricating component can be supplied to the internal pins 62. Besides, as described above, the internal pins 62 rotate by meshing with the outer teeth 53. Therefore, the lubricating component supplied to the internal pins 62 also run across the outer teeth 53. Therefore, the lubricity of the meshing section of the outer teeth 53 and the internal pins 62 can be improved. In addition, the first solid lubricant 71 may further contact with the outer teeth 53. Accordingly, the lubricity of the meshing section can be further improved.

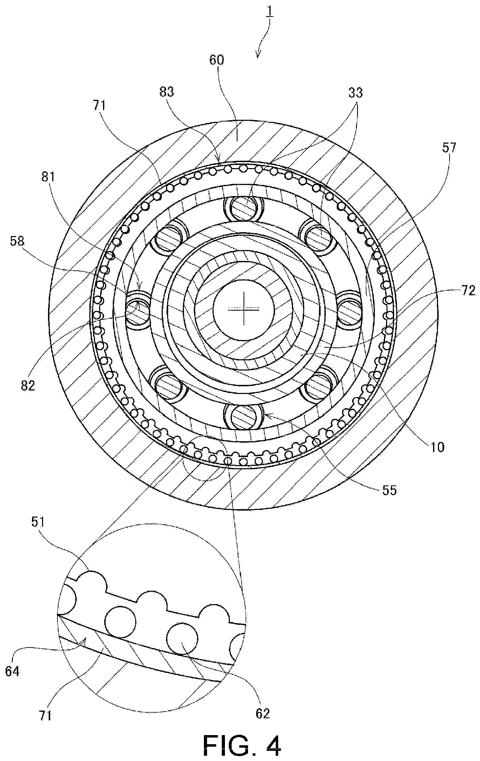

FIG. 4 is a partial cross-sectional view of the speed reducer 1 near the carrier pins 33. In the embodiment, a width d1 of the gap 56 between the first externally toothed gear 51 and the second externally toothed gear 52 in the axial direction, and a width d2 of the first groove section 64 in the axial direction satisfy the relationship of d1<d2. Therefore, the lubricating component can be efficiently supplied to the two externally toothed gears, that is, the first externally toothed gear 51 and the second externally toothed gear 52, by the first solid lubricant 71 arranged on the first groove section 64. Besides, there is no need to arrange a plurality of first groove sections 64 in the axial direction on the inner circumference section of the frame 60, thus processing cost can be controlled.

The internal pins 62 are subject to pressure toward the radial external side by meshing with the outer teeth 53. Therefore, there is concern that when the overlapping section of the first groove section 64 and the internal pins 62 in the radial direction is too large, the internal pins 62 may deform due to the pressure from the outer teeth 53. Therefore, in the embodiment, a width d3 and d2 in the axial direction from the axial lower end of the outer teeth 53 of the first externally toothed gear 51 to the axial upper end of the outer teeth 53 of the second externally toothed gear 52 satisfy the relationship of d2<d3. Furthermore, the outer teeth 53 overlap with a portion in the axial direction of the first groove section 64 in the radial direction. That is, the first groove section 64 does not overlap with the whole outer circumference section of the outer teeth 53 in the radial direction. Accordingly, the load caused by the meshing of the internal pins 62 with the outer teeth 53 is decreased. Therefore, the durability of the internal pins 62 can be improved.

Besides, as shown in FIG. 3, the first groove section 64 is annularly formed on the inner circumference section of the frame 60. And the first solid lubricant 71 is arranged inside the first groove section 64. Accordingly, the first solid lubricant 71 can contact with all the internal pins 62 arranged on the inner circumference section of the frame 60. Therefore, the lubricating component can run across all the meshing sections.

In addition, the first solid lubricant 71 arranged on the circular first groove section 64 may contact with the outer teeth 53. As described above, the first externally toothed gear 51 and the second externally toothed gear 52 revolve around the rotation axis 90 due to the power of the input rotary body 10, and rotate due to the meshing with the internal pins 62. Therefore, all the outer teeth 53 in the outer circumference section of each externally toothed gear 51, 52 can repeatedly contact with the first solid lubricant 71 at a specific period. Therefore, the lubricity of the meshing section can be further improved.

In addition, the first solid lubricant 71 of the embodiment is a plate-like member having flexibility. Therefore, the first solid lubricant 71 can be arranged by being bended and embedded along the circular first groove section 64. The first solid lubricant 71 is fixed inside the first groove section 64 by an elastic force intending to recover the first solid lubricant 71 from a bending state to a plate-like state. In this way, the first solid lubricant 71 can be easily arranged inside the first groove section 64. In addition, when the plate-like first solid lubricant 71 is arranged inside the circular first groove section 64, the two end parts oppose each other in the circumferential direction inside the first groove section 64 with third clearances 83 in between. Here, an interval of the third clearances 83 in the circumferential direction is preferably smaller than an interval of the adjacent internal pins 62 in the circumferential direction. Besides, the third clearances 83 preferably do not overlap with the internal pins 62 in the radial direction. Accordingly, the lubricating component can be supplied to all the internal pins 62 arranged on the inner circumference section of the frame 60. However, the interval of the third clearances 83 in the circumferential direction may also be larger than the interval of the adjacent internal pins 62 in the circumferential direction.

Next, a second solid lubricant 72 serving as the solid lubricant 70 is described.

As shown in FIG. 1 and FIG. 3, the second solid lubricant 72 is arranged on the gap 56 between the adjacent first externally toothed gear 51 and second externally toothed gear 52. And the second solid lubricant 72 contacts with each externally toothed gear 51, 52 and the carrier pins 33. Besides, in the embodiment, the second solid lubricant 72 further contacts with the bushing rings 58. Accordingly, the lubricity of each externally toothed gear 51, 52, the carrier pins 33 and the bushing rings 58 can be improved.

As shown in FIG. 3, the second solid lubricant 72 of the embodiment is formed by a single member. Therefore, the second solid lubricant 72 can be easily incorporated to the interior of the frame 60. However, the second solid lubricant 72 may also be formed by a plurality of members. Besides, the plurality of second solid lubricant may be arranged while being made to contact with the plurality of carrier pins 33 and each externally toothed gear 51, 52 separately.

Besides, as shown in FIG. 4, a width d4 of the second solid lubricant 72 in the axial direction is preferably below a width of the spacer 57 in the axial direction, namely the width d1 of the gap 56 in the axial direction. In this way, the second solid lubricant 72 is easily arranged on the gap 56. Besides, the width d1 of the gap 56 in the axial direction can be accurately maintained to a specific value.

Moreover, the second solid lubricant 72 is subject to a force toward the radial external side caused by an eccentric force along with the rotation of the input rotary body 10. However, in the embodiment, the second solid lubricant 72 is arranged between the input rotary body 10 and the carrier pins 33. Therefore, the movement of the second solid lubricant 72 toward the radial external side is controlled by the carrier pins 33. Therefore, the second solid lubricant 72 is accurately and steadily kept. Besides, the second solid lubricant 72 can efficiently supply the lubricating component to the carrier pins 33 by using the eccentric force.

As described above, the internal diameter of the bushing rings 58 is larger than the external diameter of the carrier pins 33. That is, second clearances 82 exist between the bushing rings 58 and the carrier pins 33. And the lubricating component supplied from the second solid lubricant 72 enters the second clearances 82. Therefore, the bushing rings 58 can smoothly transfer power to the carrier pins 33. In addition, the lubricating component supplied from the second solid lubricant 72 also enters the first clearances 81 between the surface forming the through holes 55 and the outer circumference surface of the carrier pins 33. Therefore, the carrier pins 33 can smoothly rotate inside the through holes 55.

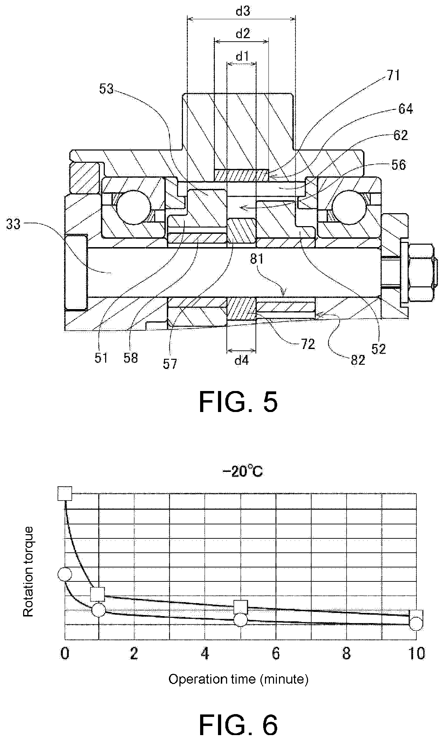

FIG. 5 is a diagram illustrating a relationship of an operation time and a rotation torque when the speed reducer 1 is driven at a circumstance of -20°C. FIG. 6 is a diagram illustrating a relationship of a driving time and a rotation torque when the speed reducer 1 is driven at a circumstance of 0°C. In FIG. 5 and FIG. 6, a series of data plotted by marks ○ is data of the speed reducer 1 of the embodiment. Besides, a series of data plotted by marks □ is data of a liquid grease sealing type speed reducer. The horizontal axis in FIG. 5 and FIG. 6 represents an operation time of the speed reducer. Besides, the vertical axis represents a rotation torque (magnitude of resistance) of the speed reducer.

As seen from the results of FIG. 5 and FIG. 6, compared with the liquid grease sealing type speed reducer, the rotation torque of the speed reducer 1 of the embodiment is decreased. In particular, during the starting when the operation time in FIG. 5 and FIG. 6 is 0 minute, the rotation torque is decreased by more than 50%. Therefore, in the speed reducer 1 of the embodiment, the electric power consumed to drive the speed reducer can be reduced. In addition, starting failure due to overload in the starting of the speed reducer can be prevented. That is, the starting performance of the speed reducer can be improved. When the liquid grease sealing type speed reducer is used, at such circumstances with a low temperature of 0°C or -20°C, the viscosity of the liquid grease increases, thus the rotation torque increases. However, in the speed reducer 1 of the embodiment, increase in the rotation torque caused by the use at a low temperature circumstance can be prevented.

In particular, when the liquid grease sealing type speed reducer is applied to an industrial robot such as a six-axis robot, the amount of grease or degeneration state of the interior of the speed reducer should be check regularly. Besides, when adding or replacing the liquid grease, the operation of the robot must be stopped temporarily, thus the productivity is reduced. However, in the speed reducer 1 of the embodiment, there is no concern of decrease in lubricity caused by grease leakage. Moreover, the lubricity of the speed reducer can be maintained for a long term. Therefore, when the speed reducer 1 of the embodiment is applied to an industrial robot, the frequency of maintenance can be reduced and the productivity can be improved.

In the above, the exemplary embodiment of the present invention is described, but the present invention is not limited to the above-mentioned embodiment.

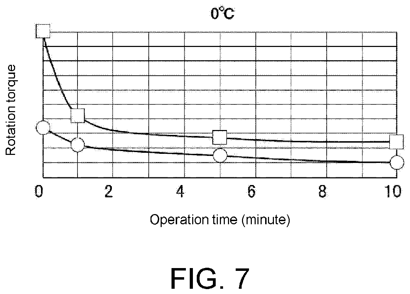

FIG. 7 is a transverse cross-sectional view of a speed reducer 1A of a variation. In the speed reducer 1A of FIG. 7, a first solid lubricant 71A is arranged on a first groove section 64A formed on the inner circumference section of a frame 60A. Besides, the frame 60A has a concave section 65A which further dents from the first groove section 64A toward the radial external side. And an auxiliary lubricant 73A exists inside the concave section 65A. In addition, the auxiliary lubricant 73A may be any one of a liquid, substantially liquid (semisolid, gel and so on), and solid lubricant. Accordingly, besides the lubricating component of the first solid lubricant 71A, the lubricating component of the auxiliary lubricant 73A can also be supplied to the internal pins 62A and the outer teeth 53A. Therefore, the resistance in the meshing section of the outer teeth 53A and the internal pins 62A can be further decreased.

Besides, the speed reducer 1A of FIG. 7 further includes a supplying mechanism 74A which supplies the auxiliary lubricant 73A to the concave section 65A. The supplying mechanism 74A has, for example, a pipe 77A which connects a supplying source 75A that supplies the auxiliary lubricant 73A to the concave section 65A. A switching valve 76A is disposed on the path of the pipe 77A. When the switching valve 76A is opened, the auxiliary lubricant 73A from the supplying source 75A passes through the pipe 77A and is supplied to the interior of the concave section 65A. Accordingly, the speed reducer 1A can maintain the lubricity for a long time.

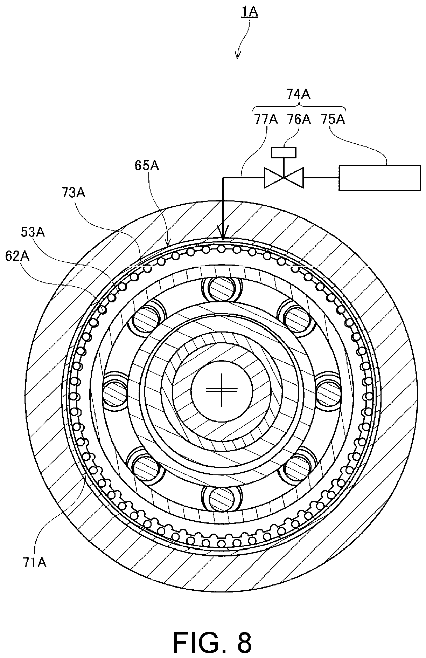

FIG. 8 is a partial vertical cross-sectional view near a carrier pin 33B of a speed reducer of another variation. In the speed reducer, a first solid lubricant 71B is arranged on a first groove section 64B formed on the inner circumference section of a frame 60B. And a surface of the first solid lubricant 71B on the radial internal side is positioned closer to the radial internal side than a surface of the frame 60B on the radial internal side. Accordingly, the first solid lubricant 71B easily contacts with the internal pins 62B and the outer teeth 53B. Besides, because the internal pins 62B contacts with the first solid lubricant 71B while rotating, the lubricating component easily oozes from the first solid lubricant 71B. Therefore, the lubricity of the meshing section of the outer teeth 53B and the internal pins 62B can be further improved.

In particular, in the example of FIG. 8, a portion of the outer teeth 53B of the first externally toothed gear 51B and the second externally toothed gear 52B opposes the surface of the first solid lubricant 71B on the radial internal side in the radial direction. Therefore, the lubricating component can be more sufficiently supplied from the first solid lubricant 71B to the outer teeth 53B.

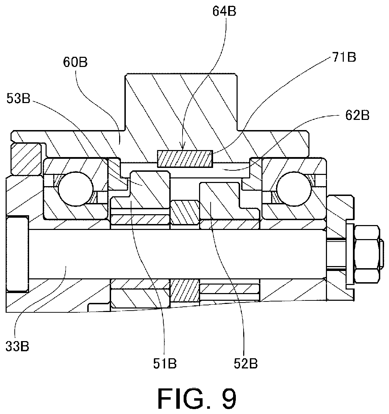

FIG. 9 is a transverse cross-sectional view of a speed reducer of another variation. A second solid lubricant 72C of the speed reducer is arranged between an input rotary body 10C and a spacer 57C. And the second solid lubricant 72C is formed by a single member. The second solid lubricant 72C has a plurality of positioning holes 73C. And a plurality of carrier pins 33C is arranged on the positioning holes 73C separately. In this way, the second solid lubricant 72C can be easily incorporated. Besides, the second solid lubricant 72C can be more accurately positioned on the plurality of carrier pins 33C and can be steadily kept. Besides, the second solid lubricant 72C can efficiently supply the lubricating component to the carrier pins 33C by using an eccentric force.

In addition, as shown in FIG. 9, the second solid lubricant 72C preferably surrounds at least a portion of the outer circumference of the carrier pins 33C. In the example of FIG. 9, the second solid lubricant 72C surrounds an approximate semicircle of the outer circumference section of the carrier pins 33C. Therefore, the motion of the second solid lubricant 72C in the circumferential direction is controlled, and the second solid lubricant 72C is more steadily kept. Besides, the contacting section of the second solid lubricant 72C and the carrier pins 33C becomes larger. Therefore, the second solid lubricant 72C supplies the lubricating component to the carrier pins 33C more easily.

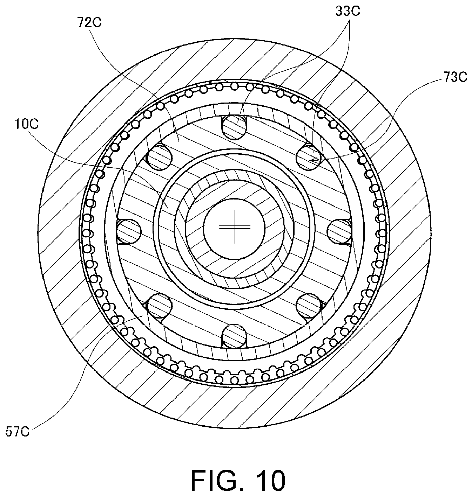

FIG. 10 is a transverse cross-sectional view of a speed reducer of another variation. A spacer 57D of the speed reducer is arranged on the radial internal side of carrier pins 33D. And a second solid lubricant 72D is arranged between the spacer 57D and internal pins 62D. Besides, the second solid lubricant 72D is formed by a single member. The second solid lubricant 72D has a plurality of positioning holes 73D. And the plurality of carrier pins 33C is arranged on the positioning holes 73D separately. Even in such a structure, the second solid lubricant 72D can supply the lubricating component to the carrier pins 33D and the externally toothed gear.

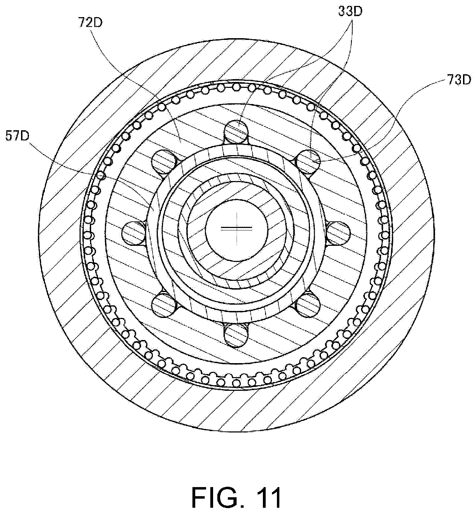

FIG. 11 is a vertical cross-sectional view of a speed reducer of another variation. Adjacent externally toothed gears 51E, 52E of the speed reducer have, on mutually opposing surfaces, second groove sections 66E which dent in the axial direction. And a portion of the second solid lubricant 72E is arranged on the second groove sections 66E. Accordingly, the second solid lubricant 72B is easily arranged between each of the externally toothed gears 51E, 52E. Besides, the second solid lubricant 72E can be steadily kept in a gap 56E.

Besides, in the embodiment, one first groove section is formed on the inner circumference section of the frame. However, the number of the first groove sections formed on the inner circumference section of the frame may be more than two. And the solid lubricant may be arranged on each of the more than two first groove sections.

Besides, in the embodiment, the speed mechanism has two externally toothed gears which are the first externally toothed gear and the second externally toothed gear. However, the number of the externally toothed gears may also be more than three.

Besides, in the embodiment, the externally toothed gear is a so-called "spur gear" whose outer teeth are formed substantially in parallel to the axial direction. However, the externally toothed gear may also be, for example, a so-called "helical gear" whose outer teeth are formed inclined toward the rotation axis. In this case, the internal pins may be arranged inclined toward the rotation axis so as to be capable of meshing with the outer teeth which are inclined teeth.

Besides, in the embodiment, a speed reducer is shown as an example of the gear transmission. However, the gear transmission may also be a speed increasing gear which increases the rotary speed. In this case, for example, power may be supplied to the output rotary body of the speed reducer of the embodiment and the rotation number of the input rotary body is output.

Besides, the detailed shape of the gear transmission may be different from the shape shown in each drawing of the disclosure. Besides, each element recited in the embodiment or variations may be properly combined as long as no contradiction occurs.

### [Description of the Symbols]

- 1: Speed reducer
- 10: Input rotary body
- 11: First eccentric section
- 12: Second eccentric section
- 20: Speed mechanism
- 30: Output rotary body
- 31: First disk body
- 32: Second disk body
- 33: Carrier pin
- 34: Ball bearing
- 40: Eccentric bearing
- 41: Internal wheel
- 42: Roller
- 51: First externally toothed gear
- 52: Second externally toothed gear
- 53: Outer teeth
- 54: Inter-outer-teeth groove
- 55: Through hole
- 56: Gap
- 57: Spacer
- 58: Bushing ring
- 60: Frame
- 61: Inner teeth arrangement section
- 62: Internal pin
- 63: Inter-inner-teeth groove
- 64: First groove section
- 65: Concave section
- 66B: Second groove section
- 70: Solid lubricant
- 71: First solid lubricant
- 72: Second solid lubricant
- 81: First clearance
- 82: Second clearance
- 83: Third clearance
- 90: Rotation axis
- 91: First eccentric axis
- 92: Second eccentric axis

## Claims

1. A gear transmission,
which changes a rotary speed, comprising:
an input rotary body, which performs rotation motion at an input rotation number around a rotation axis;
an output rotary body, which performs rotation motion at an output rotation number different from the input rotation number; and
a transmission mechanism, which converts rotation motion of the input rotary body to rotation motion of the output rotary body and transfers the rotation motion; wherein
the transmission mechanism comprises:
a plurality of externally toothed gears, which is arranged on a radial external side of the input rotary body and comprises a plurality of through holes and a plurality of outer teeth on an outer circumference;
a spacer, which is arranged between the plurality of externally toothed gears and forms a gap between adjacent externally toothed gears;
a plurality of eccentric bearings, which is arranged on an outer circumference section of the input rotary body, and rotatably supports the externally toothed gears around an eccentric axis which is eccentric to the rotation axis;
an annular frame, which is arranged on a radial external side of the externally toothed gears; and
a plurality of internal pins, which meshes with the outer teeth along an inner circumference of the frame; wherein
the output rotary body comprises:
disk bodies, which are arranged perpendicularly to the input rotary body; and
a plurality of carrier pins, which is fixed on the disk bodies, is inserted into the plurality of through holes separately and extends in parallel to the rotation axis; and wherein
at least one solid lubricant is arranged on an interior of the frame, and
the solid lubricant is in contact with at least one of the internal pins, the externally toothed gears and the carrier pins.

2. The gear transmission according to claim 1, wherein
the frame comprises more than one first groove section on an inner circumference section which dents toward a radial external side;
the first groove sections oppose at least a portion of each of the adjacent externally toothed gears in the radial direction;
the solid lubricant comprises a first solid lubricant arranged on the first groove sections; and
the first solid lubricant at least contacts with the internal pins.

3. The gear transmission according to claim 2, wherein
the first groove sections are annularly formed on the inner circumference section of the frame.

4. The gear transmission according to claim 3, wherein
the first solid lubricant is a plate member having flexibility, and
is arranged inside the first groove sections on the inner circumference section of the frame.

5. The gear transmission according to claim 4, wherein
two end parts of the first solid lubricant oppose each other inside the first groove sections with a clearance in between, and
the internal pins overlap with the clearance in the radial direction.

6. The gear transmission according to any one of claims 2 to 5, wherein
a surface on the radial internal side of the first solid lubricant is positioned closer to the radial internal side than a surface on the radial internal side of the frame.

7. The gear transmission according to any one of claims 2 to 6, wherein
the first solid lubricant opposes the externally toothed gear in the radial direction.

8. The gear transmission according to any one of claims 2 to 7, wherein
a width of the first groove sections in the rotation axis direction is larger than a width of the gap in the rotation axis direction.

9. The gear transmission according to claim 8, wherein
the outer teeth opposes a portion of the first groove sections in the radial direction.

10. The gear transmission according to any one of claims 2 to 9, wherein
the frame comprises concave sections which further dent from the first groove sections toward the radial external side, and
an auxiliary lubricant exists inside the concave sections.

11. The gear transmission according to claim 10, further comprising
a supplying mechanism which supplies the auxiliary lubricant to the concave sections.

12. The gear transmission according to any one of claims 1 to 11, wherein
the output rotary body further comprises
a bushing ring, which surrounds the radial external side of the carrier pins, is inserted into the through hole, and transfers the rotation motion of the externally toothed gears to the carrier pins,
the solid lubricant comprises a second solid lubricant arranged on the gap, and
the second solid lubricant contacts with the adjacent externally toothed gears and the carrier pins.

13. The gear transmission according to claim 12, wherein
the second solid lubricant further contacts with the bushing ring.

14. The gear transmission according to claim 12 or 13, wherein
an internal diameter of the bushing ring is larger than an external diameter of the carrier pins.

15. The gear transmission according to any one of claims 12 to 14, wherein
the second solid lubricant is arranged between the input rotary body and the carrier pins.

16. The gear transmission according to any one of claims 12 to 15, wherein
a width of the second solid lubricant in the rotation axis direction is smaller than a width of the spacer in the rotation axis direction.

17. The gear transmission according to any one of claims 12 to 16, wherein
the externally toothed gears comprise second groove sections on a surface opposing the adjacent externally toothed gears, and
the second solid lubricant is arranged on the second groove sections.

18. The gear transmission according to any one of claims 12 to 17, wherein
the second solid lubricant surrounds at least a portion of the outer circumference of the carrier pins.

19. The gear transmission according to any one of claims 12 to 18, wherein
the second solid lubricant is formed by a single member.

20. The gear transmission according to any one of claims 1 to 19, wherein
the solid lubricant comprises a grease, macromolecular polyethylene, and a cross-linking agent.

21. The gear transmission according to any one of claims 1 to 20, wherein
the output rotation number is lower than the input rotation number.
